# EUROPEAN PATENT SPECIFICATION

(11) **EP 3 389 127 B1**
(45) Date of publication and mention of the grant of the patent: **12.06.2019**
(21) Application number: 17166479.0
(22) Date of filing: 13.04.2017
(51) Int. Cl.: H01M 8/12, H01M 8/1253, H01M 4/86, H01M 4/88, H01M 8/124, H01M 8/1213

(54) **MEMBRANE ELECTRODE ASSEMBLY STRUCTURE OF FUEL CELL AND THE METHOD OF MANUFACTURING THE SAME**
MEMBRAN-ELEKTRODEN-BAUGRUPPENSTRUKTUR DER BRENNSTOFFZELLE UND DAS VERFAHREN ZUR HERSTELLUNG DERSELBEN
STRUCTURE D'ASSEMBLAGE D'ÉLECTRODE À MEMBRANE DE LA PILE À COMBUSTIBLE ET MÉTHODE DE FABRICATION DE LA MÊME

(43) Date of publication of application: 17.10.2018
(73) Proprietor: Institute of Nuclear Energy Research, Atomic Energy Council, Executive Yuan, Taoyuan 325 (TW)
(72) Inventor: Kuo, Hong-Yi, 325 TAOYUAN (TW); Lin, Tai-Nan, 325 TAOYUAN (TW); Kuo, Jen-Yuan, 325 TAOYUAN (TW); Liao, Ming-Wei, 325 TAOYUAN (TW); Yeh, Chun-Yen, 325 TAOYUAN (TW); Chen, Yu-Ming, 325 TAOYUAN (TW); Kao, Wei-Xin, 325 TAOYUAN (TW)
(74) Representative: Lermer, Christoph

(56) References cited:
- EP-A1- 2 107 630
- EP-A1- 2 117 067
- US-A1- 2009 151 850
- US-A1- 2012 021 339
- KONDOH J ET AL: "Yttria concentration dependence of tensile strength in yttria-stabilized zirconia", JOURNAL OF ALLOYS AND COMPOU, ELSEVIER SEQUOIA, LAUSANNE, CH, vol. 365, no. 1-2, 25 February 2004 (2004-02-25), pages 253-258, XP004484540, ISSN: 0925-8388, DOI: 10.1016/S0925-8388(03)00640-6
- GHATEE M ET AL: "Investigation of electrical and mechanical properties of 3YSZ/8YSZ composite electrolytes", SOLID STATE IONICS, NORTH HOLLAND PUB. COMPANY. AMSTERDAM; NL, NL, vol. 180, no. 1, 16 February 2009 (2009-02-16), pages 57-62, XP025928535, ISSN: 0167-2738, DOI: 10.1016/J.SSI.2008.10.006 [retrieved on 2008-12-04]

## Description

### Background of the Invention

### 1. Field of the Invention

The present invention relates to a membrane electrode assembly structure for a fuel cell and a method for fabricating the same, more particularly, relates to improving the toughness and mechanical strength of an anode substrate to reduce the thickness of the substrate, thereby solving the problem of cracking during packaging and testing, increasing the output power density of the fuel cell to provide a stable electric power output in a longer duration.

### 2. Description of Related Art

A solid oxide fuel cell membrane electrode assembly (SOFC-MEA) is an energy conversion device that converts fuel to electric energy by electrochemical reaction. The traditional solid oxide fuel cell with the electrolyte supported cell (ESC) operates in a temperature range between 800 and 1000 ° C, and the thickness of the electrolyte layer is about 150-300µm. Because the thickness of the electrolyte is thick and the overall bulk impedance is large that explains the ESC SOFC needs to operate in a higher temperature.

The thickness of YSZ electrolyte layer with NiO-YSZ anode supported cell (ASC) is below 10µm, so the operating temperature can be reduced to in a range between 650 and 800° C. Before the cell is to be electrically tested in stack, the cell is packaged and it is subjected to pressure during the electrical measurement. Therefore, the mechanical strength of the cell becomes one of the important factors to be considered in the process.

The fabrication process of the traditional anode-supported SOFC-MEA is based on the tape casting technology to produce the anode green tape, and then the thickness and geometrical structure of the green substrate is adjusted by the laminating technique, followed by using a thin film ceramic process and a high temperature densification sintering process to produce a half-cell substrate including an anode supported layer and an electrolyte layer, and finally a cathode layer is built on the half-cell substrate by a screen printing technique to complete the production.

However, the main drawbacks of the conventional process described above are the poor stability and durability during reduction-oxidation cycling and thermal cycling test. In considering the basic requirements of the cathode and anode porosity in order to facilitate gas-solid reaction mechanism under the basic conditions, it is unavoidable to sacrifice mechanical strength, resulting in the subsequent cell stack packaging prone to failure situations, the mentioned above shortcomings also hinder the application and development of the SOFC.

In view of the foregoing drawbacks of the conventional fuel cell membrane electrode assembly, the inventors of the present invention have studied the drawbacks and sought for solutions.

Document US 2012/021339 A1 discloses a method of manufacturing a solid oxide fuel cell with an anode layer using a yttria stabilized zirconia (YSZ) material.

Document US 2009/151850 A1 discloses a process for fabrication of a fully dense electrolyte layer embedded in a membrane electrolyte assembly (MEA).

Document EP 2 107 630 A1 discloses a process for fabrication of a low resistance of solid oxide fuel cell through abrasion and polish.

Document EP 2 117 067 A1 discloses a process of controlling porosity/ gas permeability of a solid oxide fuel cell through combination of pore former and sintering manipulation.

### Summary of the Invention

The main object of the present invention is to provide a membrane electrode assembly structure of a fuel cell using NiO, 8YSZ, 3YSZ as the main material of the anode substrate. The 3YSZ is a material of tetragonal crystal phase exploited after calcinations to enhance the toughness and mechanical strength of material NiO-8YSZ to lessen the thickness of the anode substrate, which can moderately reduce the fuel gas diffusion path and resistance, and thus effectively improve the conductivity at the anode side of the fuel cell and improve the performance of SOFC.

Another object of the present invention is to provide a method for producing a membrane electrode assembly for a fuel cell by forming a slurry composed of NiO-8YSZ-3YSZ into an anode green tape by tape casting, followed by sintering the anode substrate, forming a film-like electrolyte layer on the surface, and when the gas permeability of the anode substrate and the electrolyte layer measured are in compliance with the specification required, then a cathode layer is formed on the outer surface of the electrolyte layer with a porous LSM material, and a membrane electrode assembly (MEA) is completed. The overall process of the fabrication is reasonable and simplified, thus the membrane electrode assembly with high strength anode substrate can be produced at low cost and high efficiency.

In order to achieve the object and effect mentioned above, the feature of the present invention comprises: a membrane electrode assembly structure of an anode of a fuel cell having a sheet structure composed of material NiO, 8YSZ, and 3YSZ, in which the NiO is of 35 to 65 wt.% and the rest is the mixture of 8YSZ and 3YSZ, the ratio of wt% of 3YSZ to wt% of 8YSZ is determined in a range from 50% to 60% when NiO is in a range from 35 wt% to 65 wt%; and the anode substrate has a thickness between 200 µm and 600 µm. The electrolyte layer is formed on the surface of the anode substrate, a cathode layer made is composed of a porous LSM material, and the layer is built on a front side of the electrolyte layer farther away from the anode substrate.

According to the mentioned above structure, the anode substrate is preferably composed of 65 wt% NiO + 22.75 wt% 8YSZ + 12.25 wt% 3YSZ, or 35 wt% NiO + 42.25 wt% 8YSZ + 22.75 wt% 3YSZ. The weight ratio of 8YSZ may be determined between 22 wt% and 23 wt%, and the 3YSZ weight ratio may be determined between 12 wt% and 13 wt% when NiO is of 65 wt%. The weight ratio of 8YSZ may be adjusted in a range from 42 wt% to 43 wt%, and the 3YSZ weight ratio may be adjusted in a range from 22 wt% to 23 wt% when NiO is of 35 wt%. Therefore, the ratio of wt% of 3YSZ to wt% of 8YSZ is determined in a range from 50% to 60% when NiO is in a range from 35 wt% to 65 wt%. According to the mentioned above structure, the anode green substrate further contains a pore-forming agent of 3 wt.% or less.

The method of fabricating the membrane electrode assembly structure of the present invention comprises the following steps: preparing an anode green tape through mixing the NiO-8YSZ-3YSZ material into an anode slurry, wherein NiO has 35 to 65 wt.% and the rest is a mixture of 8YSZ and 3YSZ, wherein the ratio of wt% of 3YSZ to wt% of 8YSZ is determined in a range from 50% to 60%, and
forming the anode slurry into a thin strip anode green tape by tape casting at a thickness of a range from 80 µm to 120 µm; subjecting the thin strip anode green tape to a hot lamination and water pressure equalization process to fabricate an anode green substrate with a thickness between 200 µm and 600 µm;
sintering the anode green substrate to form an anode substrate, applying a thin film-like electrolyte on the flat surface of the anode substrate, and sintering to form an electrolyte layer, measuring the gas permeability of the anode substrate and the electrolyte layer using a gas permeability meter, and checking the microstructure of the anode substrate and the electrolyte layer through Scanning Electron Microscope (SEM) microstructural analysis to examine that if the microstructural analysis shows the gas permeability is below 9.86923 10⁻¹⁸ m² (1.0 × 10⁻⁵ Darcy) and the microstructure has reached a pore-free state, then the result is confirmed affirmative "Y", and if the result is "N", the process subjects to repeat the preceding step of sintering process, forming a cathode layer on the outer surface of the electrolyte layer to form a cathode layer by a calcination process, and building a porous LSM material on the outer surface of the electrolyte layer by screen printing, and a calcination process is carried out to form a cathode layer on the outer surface of the electrolyte layer to complete the fabrication of the membrane electrode assembly structure of a fuel cell.

According to the method of fabricating the membrane electrode assembly structure of the present invention, the number of the laminated layers of the green substrate of the anode substrate is 2 to 6 layers.

According to the method of fabricating the membrane electrode assembly structure of the present invention, the sintering procedure of the green substrate of the anode substrate is sintered at a temperature of 1250 °C for 4 hours, and the rise/decrease rate of sintering temperature is 1∼3 °C / min.

According to the method of fabricating the membrane electrode assembly structure of the present invention, the sintering process of the electrolyte is performed at 1400 °C for 6 hours, and the sintering temperature increase/decrease rate is 1∼3 °C / min.

According to the method of fabricating the membrane electrode assembly structure of the present invention, the calcination procedure of the porous LSM material is carried out at 1200 °C for 3 hours, and the calcination temperature increase/decrease rate is 1∼3 °C / min.

Other objects, advantages and novel features of the invention will become more apparent from the following detailed description when taken in conjunction with the accompanying drawings.

### Brief Description of the Drawings

Fig. 1 is a plan view of the membrane electrode assembly of the present invention.
Fig. 2 is a flow chart showing the method of fabricating the membrane electrode assembly of the present invention.
Fig. 3 is a graph showing the electrical performance of the fuel cell of the anode substrate of the present invention before and after the addition of 3YSZ.
Fig. 4 is a diagram of the fuel cell impedance analysis of the anode substrate of the present invention before and after the addition of 3YSZ.
Fig. 5 is a graph of the cell's electrical performance for a long period of time according to the present invention.

### Detailed Description of the Preferred Embodiments

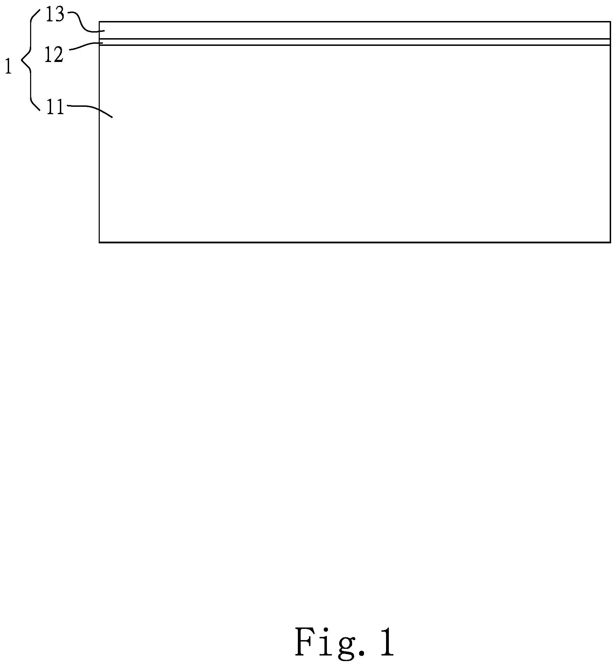

Referring to Fig. 1, the structure of the membrane electrode assembly 1 (MEA) of the present invention includes an anode substrate 11, an electrolyte layer 12, and a cathode layer 13. The anode substrate 11 is made essentially of NiO, 8YSZ, 3YSZ, wherein the composition of the anode substrate includes NiO 35 to 65 wt.% and the mixture of 8YSZ and 3YSZ in the balance.

Among the materials above mentioned, 8YSZ has the highest ionic conductivity, and the ionic conductivity of ZrO₂ increases with the addition of Y₂O₃, reaching its maximum value at 8% and decreasing after more than 8%.

At a Y₂O₃ dopant level of about 3%, it is referred to as tetragonal polycrystalline zirconia where the grain size is the smallest and has the highest mechanical toughness at room temperature, because with this condition almost 100% of the crystalline phase is tetragonal. However, at a temperature in the range of 200-500° C, the strength will be significantly reduced, because the crystal phase changes lead to the grain size changes, and with the increasing amount of Y₂O₃, the theoretical density decreased with the increase of the grain size.

According to the phase diagram, with the increase of the amount of Y₂O₃, the crystal phase is transformed from monoclinic to tetragonal, and when the addition amount of Y₂O₃ is 8-10%, it becomes cubic.

In a preferred embodiment, the anode substrate 11 is preferably composed of 65 wt.% NiO + 22.75 wt.% 8YSZ + 12.25 wt.% 3YSZ, and may be added in the process 3 wt. % or less of the pore-forming agent.

In the present embodiment, the thickness of the anode substrate 11 is 200 to 600 µm. The electrolyte layer 12 is formed on one surface of the anode substrate 11. The cathode layer 13 is formed of a porous LSM material, and the cathode layer 13 is formed on a front side of the electrolyte layer 12 farther away from the anode substrate 11.

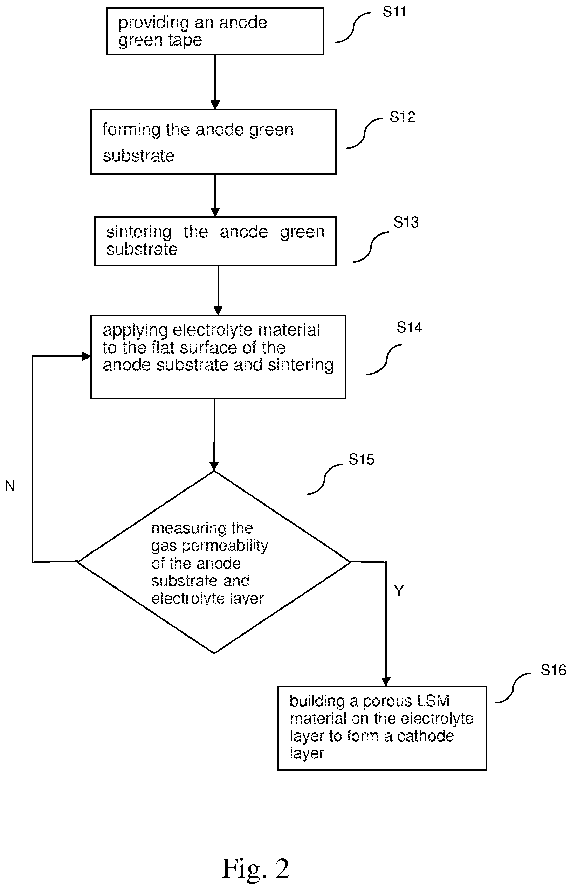

Referring to Fig. 2, it is shown that the fabricating process of the membrane electrode assembly 1 of the present invention comprises the steps: S11 of "preparing an anode green tape," S12 "processing the anode green tape to form an anode green substrate with a predetermined thickness," S13 "sintering the anode green substrate and forming an anode substrate," S14 "coating an electrolyte material on the surface of the anode substrate and sintering to form an electrolyte layer," S15 "measuring whether the gas permeability of the anode substrate and the electrolyte layer is in compliance with specification," and S16 "forming a porous LSM material on the outer surface of the electrolyte layer and forming a cathode layer by a calcination process".

The following description refers to the structure of Fig. 2 as follows:
The S11 is a step to provide an anode green tape by adding a pore-forming agent in an amount of 3 wt.% or less to the NiO-8YSZ-3YSZ mixture of an anode slurry, and the mixture is formed into a thin strip anode green tape by tape casting at a thickness of 80 to 120 µm.
The S12 is a step of subjecting a plurality of 2 to 6 layers of the thin strip anode green tape to a hot lamination and water pressure equalization process to form the anode green substrate with preferable thickness between 200 µm and 600 µm.
The S13 is a step of sintering the anode green substrate for 4 hours at a temperature of 1250 °C and a sintering temperature increase/decrease rate of 1∼3 °C / min to produce an anode substrate.
The S14 is a step applying a thickness of less than 10 µm electrolyte material to the flat surface of the anode substrate by the spin coating and sintering at a temperature of 1200 °C to 1600 °C, preferably at 1400 °C, at a sintering temperature rise/decrease rate of 1∼3 °C / min for at least 6 hours to form an electrolyte layer 12 on the surface on the anode substrate 11.
The S15 is a step of measuring the gas permeability of the anode substrate and the electrolyte layer, examining if the permeability measurement is in compliance with the specification. In which, the gas permeability of the anode substrate 11 and the electrolyte layer 12 is measured by a gas permeability meter to determine that if the permeability measurement is in compliance with 9.86923 10⁻¹⁸ m² (1.0 x 10⁻⁵ Darcy) or less, and the microstructure observation was performed using a scanning electron microscope to confirm that the surface of the anode substrate 11 and the surface of the electrolyte layer 12 were well bonded.

When the observation result is negative and denoted as "N", the structure had open pores and the gas permeability did not meet the specifications, the preceding step is carried out to repair defect at a temperature of 1200-1400 °C for 6 hours, preferably until a fully dense of the microstructure is attained, and if the observation result is affirmative "Y", it indicates that the microstructure has no open pores, and the microstructural state can be regarded as fully dense and gas-isolating.

The S16 is a step of building a porous LSM material on the outer surface of the electrolyte layer 12 by screen printing, followed by performing calcination at a temperature of 1200 ° C with a calcinating temperature increase/decrease rate of 1∼3 ° C /min to form a cathode layer 13 and complete the fabrication process of a membrane electrode assembly (MEA).

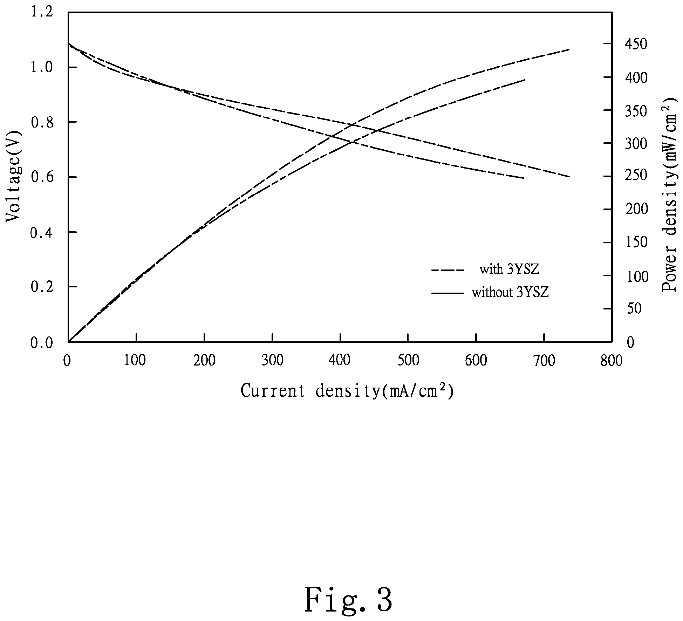

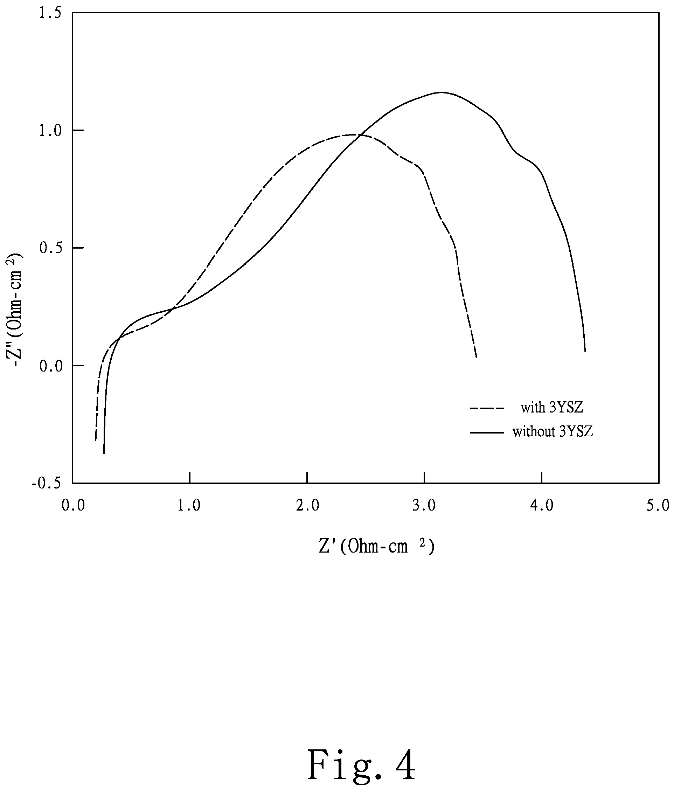

Referring to Fig. 3 and 4, it can be seen that in the structure of the above described membrane electrode assembly 1 of the present invention, since the 3YSZ has a lower ionic conductivity than 8YSZ, partial doping of 3YSZ can effectively enhance the strength of the anode substrate 11, and the total cell thickness of the unit cell fabricated in a preferred embodiment of the present invention can be reduced from 550 µm to 450 µm, thus reducing the gas diffusion resistance of the anode and thus the total impedance of the unit cell; The results of comparison of the electrical performance test show that the cell's open circuit voltage is close to the theoretical standard value (> 1.1V), and power efficiency significantly increased by 15% .

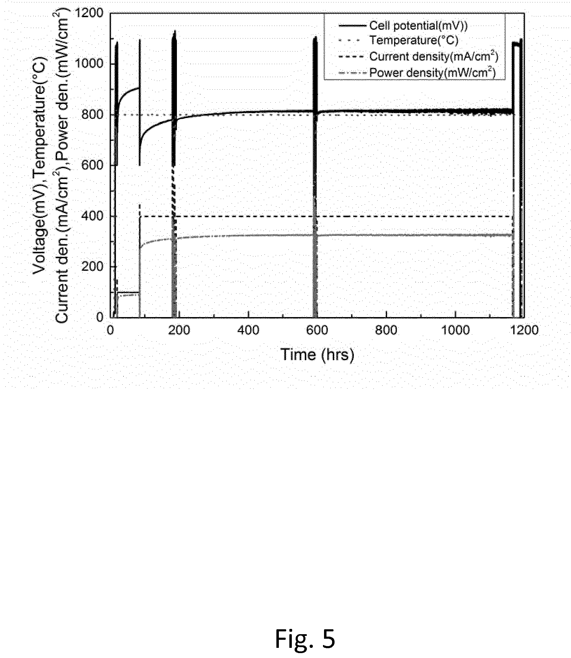

As shown in Fig. 5, the long-term test results of the battery electrical performance, operating at a constant current of 400 mAcm⁻², it showed continued increase in the cell voltage rise slope, indicating that reducing the thickness of the anode substrate 11 shortened the gas diffusion path that leads to the gas concentration increasing at the ripple phase boundary (TPB) at the interface between the anode substrate 11 and the electrolyte layer 12, improving the electrochemical reaction efficiency, and the decay rate is 1% or less after the 1,000-hour operation test, thereby enhancing the durability and stability of the cell operation.

In view of the above description, the membrane electrode assembly structure of the fuel cell and the fabrication method of the present invention can be used to improve the toughness and the mechanical strength of the anode substrate to enable reducing the thickness of the substrate and enhancing the anode side conductivity and the cell performance.

It is to be understood that even though numerous characteristics and advantages of the present invention have been set forth in the foregoing description, together with details of the structure and function of the invention, the disclosure is illustrative only, and changes may be made in detail, especially in matters of shape, size, and arrangement of parts.

## Claims

1. A membrane electrode assembly structure of a fuel cell including an anode substrate having a sheet structure composed of materials NiO, 8YSZ, and 3YSZ; an electrolyte layer formed on the surface of the anode substrate; a cathode layer composed of a porous LSM material, wherein the cathode layer is formed on a front side of the electrolyte layer farther away from the anode substrate; **characterized in that** NiO has 35 to 65 wt.% and the rest is a mixture of 8YSZ and 3YSZ;
the ratio of wt% of 3YSZ to wt% of 8YSZ is determined in a range from 50% to 60% when NiO is in a range from 35 wt% to 65 wt%;
the anode substrate has a thickness between 200 µm and 600 µm.

2. The membrane electrode assembly structure of a fuel cell according to claim 1, wherein the anode substrate comprises 65 wt% NiO + 22.75 wt% 8YSZ + 12.25 wt% 3YSZ.

3. The membrane electrode assembly structure of a fuel cell according to claim 1, wherein the anode green substrate contains a pore-forming agent of 3 wt.% or less.

4. A method of fabricating a membrane electrode assembly structure of a fuel cell, comprising steps:
providing an anode green tape by adding a pore-forming agent in an amount of 3 wt.% or less to the NiO-8YSZ-3YSZ mixture of an anode slurry, wherein NiO has 35 to 65 wt.% and the rest is a mixture of 8YSZ and 3YSZ, wherein the ratio of wt% of 3YSZ to wt% of 8YSZ is determined in a range from 50% to 60%, and the mixture is formed into a thin strip anode green tape by tape casting at a thickness of a range from 80 µm to 120 µm;
subjecting a plurality of the thin strip anode green tape to a hot lamination and water pressure equalization process to form an anode green substrate with thickness between 200 µm and 600 µm;
sintering the anode green substrate for about 4 hours in at a temperature of 1250 °C and a sintering temperature increase/decrease rate of 1∼3 °C / min to produce an anode substrate;
applying a thickness of less than 10 µm electrolyte material to the flat surface of the anode substrate by the spin coating and sintering at a temperature in a range of 1200 °C to 1600 °C, at a temperature increase/decrease rate of 1∼3 °C / min for at least 6 hours to form an electrolyte layer on the surface on the anode substrate;
measuring the gas permeability of the anode substrate and the electrolyte layer by a permeability meter, determining if the permeability measurement is of 9.86923 x 10⁻¹⁸ m² (1.0 x 10⁻⁵ Darcy) or less, and checking if the surface of the anode substrate and the surface of the electrolyte layer were well bonded through a scanning electron microscope (SEM), if the result is negative, the preceding step is carried out to repair defect at a temperature of 1200 °C -1400 °C for 6 hours, until a fully dense of the microstructure is attained, and if the result is affirmative, indicating the microstructure has no open pores left,
building a porous LSM material on the outer surface of the electrolyte layer by screen printing, followed by performing calcination at a temperature of 1200 °C with increase / decrease rate 1∼3 °C/min, forming the porous LSM material on the outer surface of the electrolyte layer as cathode layer and the membrane electrode assembly structure is completed.

5. The method of fabricating a membrane electrode assembly for a fuel cell according to claim 4, wherein the number of layers of the anode thin strip green tape is 2 to 6 layers.

6. The method of fabricating a membrane electrode assembly for a fuel cell according to claim 4, wherein the sintering step of the electrolyte is performed at 1400 °C for 6 hours with increase / decrease rate of 1∼3 °C/ min.

7. The method of fabricating a membrane electrode assembly for a fuel cell according to claim 4, wherein the calcination of the porous LSM material is performed at 1200 °C for 3 hours with increase / decrease rate of 1∼3 °C/ min.

## Patentansprüche

1. Membranelektrodenanordnungsstruktur einer Brennstoffzelle mit einem Anodensubstrat mit einer Blattstruktur, die aus den Materialien NiO, 8YSZ und 3YSZ zusammengesetzt ist; eine Elektrolytschicht, die auf der Oberfläche des Anodensubstrats ausgebildet ist; eine Kathodenschicht, die aus porösem LSM Material zusammengesetzt ist, wobei die Kathodenschicht an einer Vorderseite der Elektrolytschicht weiter weg vom Anodensubstrat gebildet ist; **dadurch gekennzeichnet, dass**
NiO 35 bis 65 Gew.-% aufweist und der Rest eine Mischung aus 8YSZ und 3YSZ ist; das Verhältnis von Gew.-% von 3YSZ zu Gew.-% von 8YSZ in einem Bereich von 50% bis 60% bestimmt wird, wenn NiO in einem Bereich von 35 Gew.-% bis 65 Gew.-% liegt;
das Anodensubstrat eine Dicke zwischen 200 µm und 600 µm hat.

2. Membranelektrodenanordnungsstruktur einer Brennstoffzelle nach Anspruch 1, wobei das Anodensubstrat 65 Gew.-% NiO + 22,75 Gew.-% 8YSZ + 12,25 Gew.-% 3YSZ umfasst.

3. Membranelektrodenanordnungsstruktur einer Brennstoffzelle nach Anspruch 1, wobei das ungesinterte Anodensubstrat einen Porenbildner von 3 Gew.-% oder weniger enthält.

4. Verfahren zum Herstellen einer Membranelektrodenanordnungsstruktur einer Brennstoffzelle, umfassend die Schritte:
Bereitstellen eines ungesinterten Anodenbandes durch Zugabe eines Porenbildners in einer Menge von 3 Gew.-% oder weniger zu der NiO-8YSZ-3YSZ-Mischung einer Anodenaufschlämmung, wobei NiO 35 bis 65 Gew.-% aufweist und der Rest eine Mischung von 8YSZ und 3YSZ ist, wobei das Verhältnis von Gew.-% von 3YSZ zu Gew.-% von 8YSZ in einem Bereich von 50% bis 60% bestimmt wird, und die Mischung durch Bandgießen in dünne Streifen eines ungesinterten Anodenbands mit einer Dicke in einem Bereich von 80 µm bis 120 µm geformt wird;
Anwenden eines Heißlaminierungs- und Wasserdruckausgleichsverfahrens auf eine Vielzahl der Streifen ungesinterten Anodenbands, um ein ungesintertes Anodensubstrat mit einer Dicke zwischen 200 µm und 600 µm zu bilden;
Sintern des ungesinterten Anodensubstrats für etwa 4 Stunden bei einer Temperatur von 1250 ° C und einer Sintertemperaturerhöhungs- / -abnahmerate von 1 bis 3 °C / min, um ein Anodensubstrat herzustellen;
Aufbringen einer Dicke von weniger als 10 µm Elektrolytmaterial auf die flache Oberfläche des Anodensubstrats durch Spin Coating und Sintern bei einer Temperatur im Bereich von 1200 ° C bis 1600 ° C bei einer Temperaturanstiegs- / -absenkungsrate von 1 bis 3 °C / min für mindestens 6 Stunden, um eine Elektrolytschicht auf der Oberfläche des Anodensubstrats zu bilden;
Messen der Gaspermeabilität des Anodensubstrats und der Elektrolytschicht durch ein Permeabilitätsmessgerät, Bestimmen, ob die Permeabilitätsmessung 9,86923 × 10⁻¹⁸ m² (1,0 × 10⁻⁵ Darcy) oder weniger beträgt, und Prüfen durch ein Rasterelektronenmikroskop (SEM), ob die Oberfläche des Anodensubstrats ist und die Oberfläche der Elektrolytschicht gut verbunden wurden, wenn das Ergebnis negativ ist, wird der vorangehende Schritt durchgeführt, um den Defekt bei einer Temperatur von 1200 bis 1400°C für 6 Stunden zu reparieren, bis eine vollständig dichte Mikrostruktur erreicht ist, und wenn das Ergebnis positiv ist, bedeutet dies, dass die Mikrostruktur keine offenen Poren mehr aufweist.
Bilden eines porösen LSM-Materials auf der äußeren Oberfläche der Elektrolytschicht durch Siebdruck, gefolgt von Kalzinieren bei einer Temperatur von 1200 °C mit einer Anstiegs- / Abnahmerate von 1 bis 3 °C / min, wobei das poröse LSM-Material auf der äußeren Oberfläche der Elektrolytschicht als Kathodenschicht gebildet wird und die Membranelektrodenanordnungsstruktur fertiggestellt ist.

5. Verfahren zur Herstellung einer Membranelektrodenanordnung für eine Brennstoffzelle nach Anspruch 4, wobei die Anzahl der Schichten des ungesinterten Anoden-Dünnstreifenbandes 2 bis 6 Schichten beträgt.

6. Verfahren zur Herstellung einer Membranelektrodenanordnung für eine Brennstoffzelle nach Anspruch 4, wobei der Sinterschritt des Elektrolyts bei 1400 °C für 6 Stunden mit einer Anstiegs- / Abnahmerate von 1 bis 3 °C / min durchgeführt wird.

7. Verfahren zur Herstellung einer Membranelektrodenanordnung für eine Brennstoffzelle nach Anspruch 4, wobei das Kalzinieren des porösen LSM-Materials 3 Stunden bei 1200 °C mit einer Anstiegs- / Abnahmerate von 1 bis 3 °C / min durchgeführt wird.

## Revendications

1. Structure d'ensemble électrode à membrane d'une pile à combustible comprenant un substrat d'anode ayant une structure de feuilles composée des matériaux NiO, 8YSZ et 3YSZ ; une couche d'électrolyte formé sur la surface du substrat d'anode ; une couche de cathode composée d'un matériau de LSM poreux, dans laquelle la couche de cathode est formée sur un côté avant de la couche d'électrolyte de manière la plus éloignée du substrat d'anode ; **caractérisée en ce que**
le NiO représente entre 35 et 65 % en poids et le reste représente un mélange de 8YSZ et de 3YSZ ;
le rapport du pourcentage massique de 3YSZ au pourcentage massique de 8YSZ est déterminé dans une plage comprise entre 50 % et 60 % dans laquelle le NiO se trouve dans une plage comprise entre 35 % en poids et 65 % en poids ;
le substrat d'anode comporte une épaisseur comprise entre 200 µm et 600 µm.

2. Structure d'ensemble électrode à membrane d'une pile à combustible selon la revendication 1, dans laquelle le substrat d'anode de comprend 65 % en poids de NiO + 22,75 % en poids de 8YSZ + 12,25 % en poids de 3YSZ.

3. Structure d'ensemble électrode à membrane d'une pile à combustible selon la revendication 1, dans laquelle le substrat vert d'anode contient un agent de formation de pores inférieur ou égal à 3 % en masse.

4. Procédé de fabrication d'une structure d'ensemble électrode à membrane d'une pile à combustible, comprenant les étapes suivantes :
obtention d'un ruban cru d'anode au moyen de l'addition d'un agent de formation de pores dans une quantité inférieure ou égale à 3 % en poids du mélange NiO-8YSZ-3YSZ d'une suspension d'anode, dans lequel NiO représente entre 35 et 65 % en poids et le reste représente un mélange de 8YSZ et de 3YSZ, dans lequel le rapport de pourcentage massique de 3YSZ au pourcentage massique de 8YSZ est déterminé dans une plage comprise entre 50 % et 60 %, et le mélange est formé sur un ruban cru pour anode à bande mince au moyen d'un coulage en bande au niveau d'une épaisseur dans une plage comprise entre 80 µm et 120 µm ;
soumission d'une pluralité du ruban cru pour anode à bande mince à une stratification à chaud et à un processus d'égalisation de pression d'eau afin de former un substrat vert d'anode ayant une épaisseur comprise entre 200 µm et 600 µm ;
frittage du substrat vert d'anode pendant environ 4 heures à une température de 1250°C et à un taux d'augmentation/de diminution de température de frittage compris entre 1 et 3 °C/min afin de produire un substrat d'anode ;
application d'une épaisseur inférieure à 10 µm d'un matériau d'électrolyte sur la surface plate du substrat d'anode au moyen du dépôt à la tournette et du frittage à une température dans une plage comprise entre 1200°C et 1600 °C, à un taux d'augmentation/de diminution compris entre 1 et 3 °C/min pendant au moins 6 heures afin de former une couche d'électrolyte sur la surface du substrat d'anode ;
mesure de la perméabilité au gaz du substrat d'anode et de la couche d'électrolyte au moyen d'un compteur de perméabilité, déterminant si la mesure de perméabilité est inférieure ou égale à 9,86923 x 10⁻¹⁸ m² (1,0 x 10⁻⁵ Darcy), et vérification de savoir si la surface du substrat d'anode et la surface de la couche d'électrolyte sont bien liées grâce à un microscope à balayage électronique (SEM), si le résultat est négatif, l'étape précédente est effectuée afin de réparer les défauts à une température comprise entre 1200 °C et 1400°C pendant 6 heures, jusqu'à ce qu'une densité complète de la microstructure soit atteinte, et si le résultat est affirmatif, indication que la microstructure ne présente aucun pore ouvert,
construction d'un matériau de LSM poreux sur la surface extérieure de la couche d'électrolyte au moyen d'une impression d'écran, suivie de la réalisation de la calcination à une température de 1200 °C avec un taux d'augmentation/de diminution compris entre 1 et 3 °C/min, formation du matériau de LSM poreux sur la surface extérieure de la couche d'électrolyte en tant que couche de cathode et la structure d'ensemble électrode à membrane est complétée.

5. Procédé de fabrication d'une structure d'ensemble électrode à membrane d'une pile à combustible selon la revendication 4, dans lequel le nombre de couches du ruban cru à bande mince pour anode est compris entre 2 et 6 couches.

6. Procédé de fabrication d'une structure d'ensemble électrode à membrane d'une pile à combustible selon la revendication 4, dans lequel l'étape de frittage de l'électrolyte est effectuée à 1400 °C pendant 6 heures avec un taux d'augmentation/de diminution compris entre 1 et 3 °C/min.

7. Procédé de fabrication d'une structure d'ensemble électrode à membrane d'une pile à combustible selon la revendication 4, dans lequel la calcination du matériau de LSM poreux est effectuée à 1200 °C pendant 3 heures avec un taux d'augmentation/de diminution compris entre 1 et 3 °C/min.
